# FASCICULE DE BREVET EUROPEEN

(11) **EP 3 557 177 B1**
(45) Date de publication et mention de la délivrance du brevet: **02.02.2022**
(21) Numéro de dépôt: 19169530.3
(22) Date de dépôt: 16.04.2019
(51) Int. Cl.: F28F 27/02, F28D 1/053, F01P 3/18, F01P 7/14, F01P 7/16, F02B 29/04, F28D 21/00

(54) **RADIATEUR DE REFROIDISSEMENT AVEC BY-PASS INTÉGRÉ ET CIRCUIT DE REFROIDISSEMENT**
KÜHLRADIATOR MIT INTEGRIERTEM BY-PASS UND KÜHLKREISLAUF
RADIATOR FOR COOLING WITH INTEGRATED BYPASS AND COOLING CIRCUIT

(30) Priorité: 18.04.2018 FR 1853382
(43) Date de publication de la demande: 23.10.2019
(73) Titulaire: RENAULT s.a.s., 92100 Boulogne-Billancourt (FR)
(72) Inventeur: DUCHET-ANNEZ, Christophe, 78170 LA CELLE SAINT CLOUD (FR); SOLTOIAN, Serghei, 91350 GRIGNY (FR)

(56) Documents cités:
- EP-A1- 2 039 923
- DE-A1- 19 637 817
- DE-T5-112014 006 108
- US-A- 4 317 439

## Description

### DOMAINE TECHNIQUE DE L'INVENTION

L'invention concerne un radiateur de refroidissement avec by-pass intégré et un circuit de refroidissement.

L'invention concerne plus particulièrement un radiateur de refroidissement, notamment pour un véhicule automobile, comportant au moins :
- une première boîte collectrice qui comporte au moins une ouverture d'entrée d'un fluide caloporteur,
- une deuxième boîte collectrice comportant au moins une ouverture de sortie, dite première, dudit fluide caloporteur,
- un faisceau de tubes qui communique avec ladite première boîte et avec ladite deuxième boîte et dans lequel ledit fluide caloporteur est destiné à circuler pour être mis en relation d'échange thermique avec un autre fluide traversant des surfaces d'échange thermique associées audit faisceau de tubes.

L'invention concerne également un circuit de refroidissement basse température d'un moteur à combustion interne, notamment pour un véhicule automobile, comportant au moins un tel radiateur de refroidissement.

### ÉTAT DE LA TECHNIQUE

On connaît de l'état de la technique des exemples de tel radiateur de refroidissement qui sont notamment mais non exclusivement utilisés dans un circuit de refroidissement d'un moteur à combustion interne, en particulier de véhicule automobile.

Un radiateur de refroidissement est généralement associé à un conduit de dérivation ou « by-pass ».

Un tel by-pass permet d'utiliser sélectivement le radiateur de refroidissement, par exemple en faisant circuler tout ou une partie du fluide caloporteur dans le conduit de by-pass lorsque les conditions de fonctionnement ne requièrent pas ou peu de refroidissement.

Pour ce faire, il est en outre nécessaire de prévoir un « té » pour réaliser le raccordement fluidique avec le circuit de refroidissement du conduit de dérivation d'une part, et du radiateur de refroidissement d'autre part.

Cependant, l'agencement d'un tel té de raccordement, sa fixation et les jeux de fonctionnement sur le circuit de refroidissement exigent de disposer de place pour pouvoir les agencer, sans compter le radiateur de refroidissement associé.

Or, le nombre d'organes à intégrer dans un compartiment moteur de véhicule automobile n'a cessé de croître ces dernières années avec pour conséquence un manque de place, une exiguïté, qui exige de trouver des solutions pour optimiser leur implantation.

Il est connu de EP2039923 un échangeur thermique qui comporte une ouveture d'entrée et une ouverture de sortie dans l'une des boites collectrices de sorte qu'une partie du fluide effectue un échange thermique par deux passes successives au travers du faisceau, et une ouverture dans l'autre des boites collectrices de sorte qu'une autre partie du fluide effectue un échange thermique par une passe passe au travers du faisceau.

Le but de l'invention est notamment de proposer une nouvelle conception de radiateur de refroidissement permettant de résoudre au moins une partie des inconvénients de l'état de la technique tout en conservant un radiateur de refroidissement qui soit avantageusement simple à utiliser et économique à fabriquer.

### BREF RESUME DE L'INVENTION

Dans ce but, l'invention propose un radiateur de refroidissement du type décrit précédemment, ledit radiateur de refroidissement comporte au moins une autre ouverture de sortie, dite seconde, qui est agencée dans la première boîte collectrice, caractérisé en ce que les moyens de régulation sont aptes à occuper au moins :
- une position ouverte dans laquelle ledit fluide caloporteur est évacué par la première ouverture de sortie après avoir circulé dans le faisceau de tubes ; et
- une position fermée dans laquelle ledit fluide caloporteur est évacué par la seconde ouverture de sortie en by-passant le faisceau de tubes.

Avantageusement, un radiateur de refroidissement selon l'invention permet de supprimer dans un circuit de refroidissement un té de raccordement dès lors que la boîte collectrice comportant la seconde ouverture de sortie remplace un tel té.

Selon d'autres caractéristiques du radiateur de refroidissement selon l'invention :
- la deuxième boîte collectrice comporte des moyens de régulation aptes à contrôler la circulation du fluide caloporteur par ladite première ouverture de sortie ;
- les moyens de régulation sont commandés en position ouverte lorsque la température du fluide caloporteur est supérieure ou égale à une température de seuil déterminée ;
- les moyens de régulation comportent des moyens d'obturation qui sont commandés en position par au moins un moyen de détection thermosensible ou qui sont pilotés ;
- la seconde ouverture de sortie est juxtaposée à l'ouverture d'entrée.

L'invention propose encore un circuit de refroidissement basse température d'un moteur à combustion interne, notamment de véhicule automobile, ledit circuit de refroidissement basse température comportant au moins un radiateur de refroidissement selon l'invention et une conduite principale qui comporte au moins des moyens de contrôle, une pompe et un refroidisseur d'air de suralimentation, caractérisé en ce que le radiateur de refroidissement est monté en série avec le refroidisseur d'air de suralimentation de manière que ledit refroidisseur d'air de suralimentation soit relié à l'ouverture d'entrée du radiateur de refroidissement.

Selon d'autres caractéristiques du circuit de refroidissement selon l'invention :
- lesdits moyens de contrôle sont formés par une vanne trois voies qui comporte une première voie d'entrée, une deuxième voie d'entrée et une troisième voie de sortie ;
- la première voie d'entrée de la vanne est reliée par une première conduite de retour à la seconde ouverture de sortie du radiateur de refroidissement de manière à former, avec la conduite principale, une boucle fermée by-passant le radiateur de refroidissement lorsque les moyens de régulation occupent la position fermée ;
- la deuxième voie d'entrée de la vanne est reliée par une deuxième conduite de retour à la première ouverture de sortie du radiateur de refroidissement de manière à former, avec la conduite principale, une boucle fermée comportant le radiateur de refroidissement lorsque les moyens de régulation occupent la position ouverte ;
- ladite troisième voie de sortie de la vanne est reliée à ladite pompe qui est reliée audit refroidisseur d'air de suralimentation ;
   -- ledit circuit de refroidissement basse température est relié à un circuit de refroidissement haute température du moteur à combustion interne ;
   -- le circuit de refroidissement basse température est relié audit circuit de refroidissement haute température par au moins une première conduite de liaison comportant au moins une électrovanne et une deuxième conduite de liaison.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :

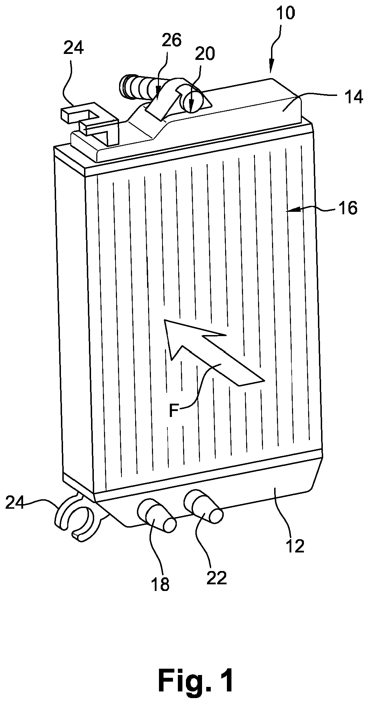

- la figure 1 est une vue de face qui représente un exemple de réalisation d'un radiateur de refroidissement selon de l'invention ;

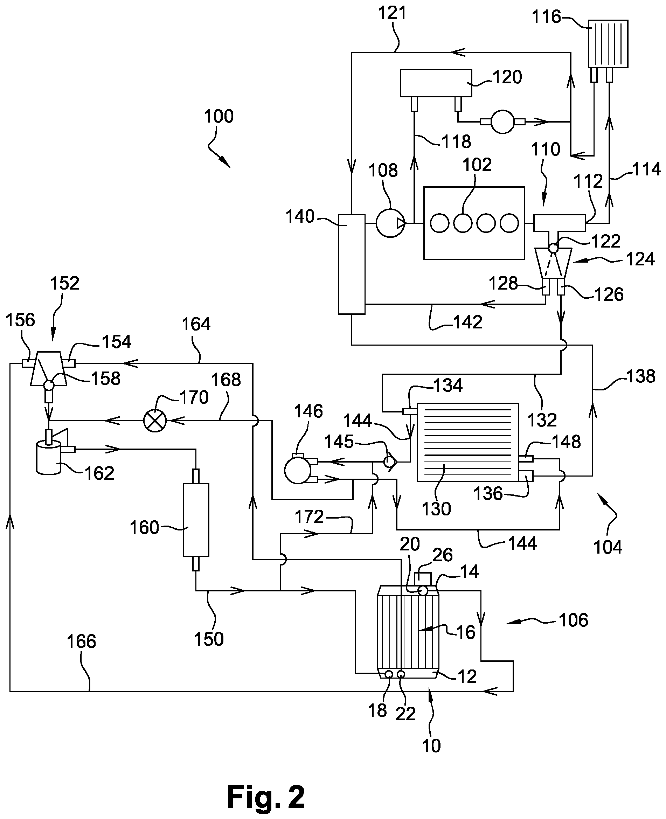

- la figure 2 est une vue schématique qui représente un circuit de refroidissement d'un moteur à combustion comportant un circuit de refroidissement haute température auquel est relié un circuit de refroidissement basse température qui comporte un radiateur de refroidissement selon la figure 1 et qui illustre dans le raccordement sans « té » d'un refroidisseur d'air de suralimentation du circuit de refroidissement basse température audit radiateur de refroidissement, la première boîte collectrice du radiateur assurant grâce à la seconde ouverture de sortie une fonction de by-pass qui est intégré audit radiateur ;

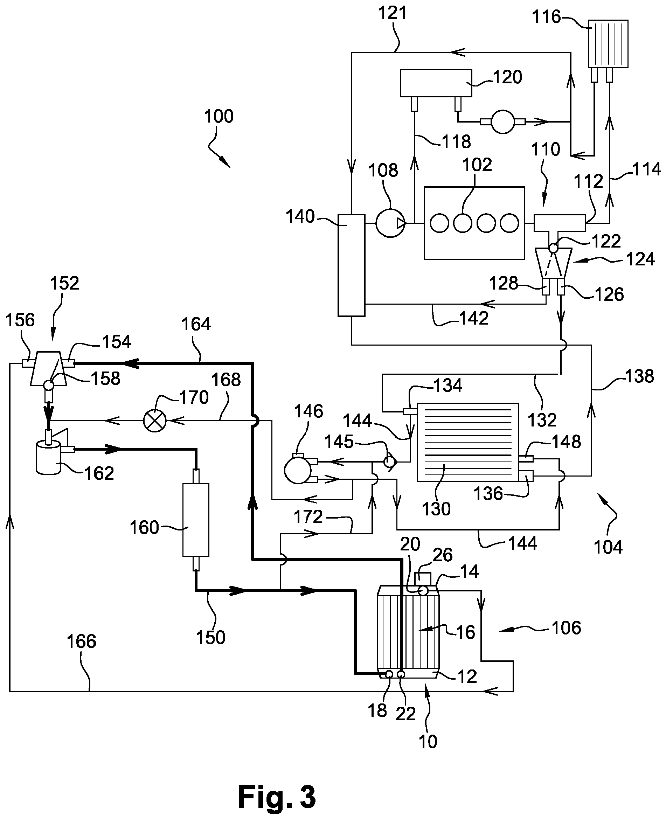

- la figure 3 est une vue schématique qui représente le circuit de refroidissement du moteur à combustion selon la figure 2 et qui illustre une première phase de fonctionnement du circuit de refroidissement basse température dans laquelle, les moyens de régulation associés au radiateur étant en position fermée, le fluide caloporteur est évacué par la seconde ouverture de sortie en by-passant le faisceau de tubes ;

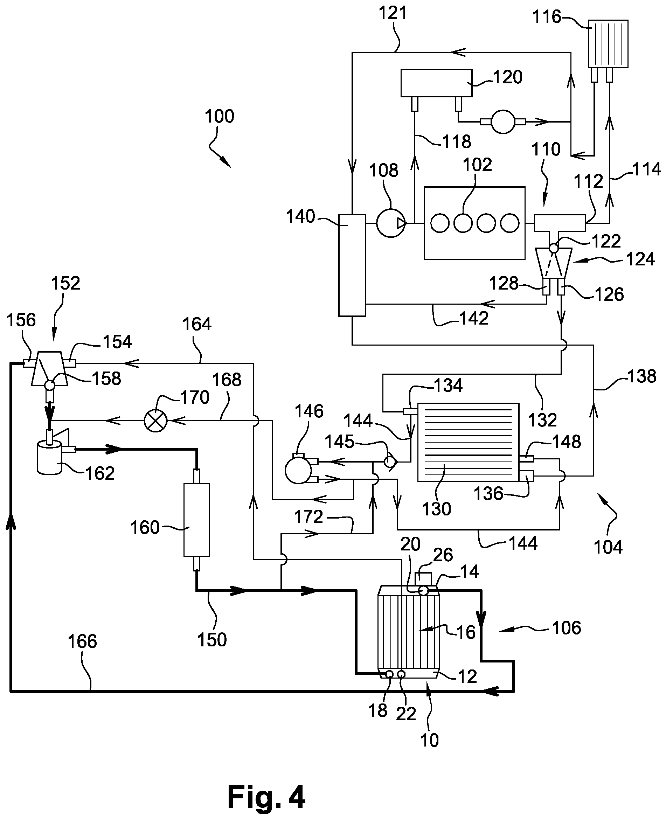

- la figure 4 est une vue schématique qui représente le circuit de refroidissement du moteur à combustion selon la figure 2 et qui illustre une deuxième phase de fonctionnement du circuit de refroidissement basse température dans laquelle, les moyens de régulation associés au radiateur étant en position ouverte, le fluide caloporteur est évacué par la première ouverture de sortie après avoir circulé dans le faisceau de tubes.

### DESCRIPTION DETAILLEE DES FIGURES

Dans la suite de la description, les termes « amont » et « aval » se réfèrent au sens de circulation du fluide caloporteur, ledit fluide caloporteur circulant de l'amont vers l'aval.

De plus, les termes « haute température » qualifient un circuit de refroidissement dans lequel le fluide caloporteur a une température qui est supérieure à celle d'un fluide caloporteur circulant dans un autre circuit de refroidissement, alors qualifié par comparaison de circuit de refroidissement « basse température ».

On a représenté sur la figure 1 un radiateur 10 de refroidissement selon un exemple de réalisation de l'invention.

Un tel radiateur 10 de refroidissement est notamment destiné à équiper un véhicule automobile.

Le radiateur 10 de refroidissement comporte au moins une première boîte 12 collectrice et une deuxième boîte 14 collectrice qui sont reliées par un faisceau 16 de tubes.

La première boîte 12 collectrice comporte au moins une ouverture 18 d'entrée d'un fluide caloporteur.

La deuxième boîte 14 collectrice comportant au moins une ouverture 20 de sortie, dite première, dudit fluide caloporteur.

Le faisceau 16 de tubes communique à une extrémité avec la première boîte 12 et à l'autre extrémité avec la deuxième boîte 14.

Le radiateur 10 de refroidissement comporte au moins une autre ouverture 22 de sortie, dite seconde, qui est agencée dans la première boîte 12 collectrice.

Avantageusement, la seconde ouverture 22 de sortie est juxtaposée à l'ouverture 18 d'entrée.

De préférence, le radiateur 10 de refroidissement comporte des moyens 24 de fixation pour son montage dans un compartiment moteur d'un véhicule automobile.

La représentation du radiateur 10 de refroidissement illustrée sur la figure 1 n'est nullement limitative d'une orientation particulière dudit radiateur, notamment verticale ou horizontale en vue de son utilisation.

Le fluide caloporteur est destiné à circuler sélectivement dans le faisceau 16 de tubes formant une partie centrale du radiateur 10 de refroidissement.

De manière connue, le faisceau 16 de tubes comporte des surfaces d'échange thermique (non représentées) par l'intermédiaire desquelles le fluide caloporteur est destiné à être mis en relation d'échange thermique avec un autre fluide traversant avec ledit faisceau 16 de tubes, tel qu'un flux F d'air illustré par une flèche sur la figure 1.

En fonctionnement, le fluide caloporteur entre dans ledit radiateur 10 par l'ouverture 18 d'entrée de la première boîte 12.

Lorsqu'un refroidissement du fluide caloporteur est recherché, le fluide caloporteur est mis en circulation à travers le faisceau 16 de tubes du radiateur 10 de refroidissement pour être refroidi par l'autre fluide avantageusement formé du flux F d'air.

Lorsqu'un refroidissement du fluide caloporteur n'est pas recherché, le fluide caloporteur est alors mis en circulation à travers un bypass pour ne pas traverser ledit faisceau 16 de tubes du radiateur 10 de refroidissement.

Dans le radiateur 10 de refroidissement selon l'invention, le by-pass est réalisé grâce à la seconde ouverture 22 de sortie agencée dans la première boîte 12 collectrice.

Le by-pass est ainsi avantageusement intégré au radiateur 10 de refroidissement, plus précisément à la première boîte 12 collectrice comportant ladite seconde ouverture 22 de sortie.

Avantageusement, un tel by-pass intégré au radiateur 10 de refroidissement et formé par la première boîte 12 collectrice permet notamment de s'affranchir de l'utilisation d'un té de raccordement.

L'invention permet d'obtenir un gain de place substantiel lors du raccordement d'un radiateur 10 de refroidissement à un circuit de refroidissement, ce qui est de manière avantageuse facilite l'implantation du radiateur 10 de refroidissement dans le compartiment moteur d'un véhicule automobile.

Pour contrôler la circulation du fluide caloporteur, des moyens 26 de régulation sont avantageusement associés au radiateur 10 de refroidissement.

Avantageusement, la deuxième boîte 14 collectrice comporte les moyens 26 de régulation.

De préférence, lesdits moyens 26 de régulation sont solidaires de la deuxième boîte 14 collectrice, sont montés au niveau de ladite première ouverture 20 de sortie du radiateur 10 de refroidissement.

La deuxième boîte 14 collectrice comporte donc lesdits moyens 26 de régulation aptes à contrôler sélectivement la circulation du fluide caloporteur dans le radiateur 10 de refroidissement.

Les moyens 26 de régulation sont aptes à occuper au moins une position ouverte dans laquelle ledit fluide caloporteur est évacué par la première ouverture 20 de sortie, c'est-à-dire après avoir circulé dans le faisceau 16 de tubes

Les moyens 26 de régulation sont aptes à occuper au moins une position fermée dans laquelle ledit fluide caloporteur est évacué par la seconde ouverture 22 de sortie en by-passant du faisceau 16 de tubes.

De préférence, ledit fluide caloporteur est évacué par la seconde ouverture de sortie en by-passant ici totalement ledit faisceau 16 de tubes lorsque lesdits moyens 26 de régulation occupent ladite position fermée.

En variante, ledit fluide caloporteur est évacué par la seconde ouverture de sortie en by-passant une partie dudit faisceau 16 de tubes, lesdits moyens 26 de régulation étant aptes à occuper au moins une position intermédiaire entre la position ouverte et la position fermée.

Avantageusement, les moyens 26 de régulation sont commandés en position ouverte lorsque la température du fluide caloporteur est supérieure ou égale à une température (TS) de seuil déterminée.

De préférence, les moyens 26 de régulation comportent au moins une vanne, telle qu'un thermostat.

Les moyens 26 de régulation comportent par exemple des moyens d'obturation qui commandés en position par au moins un moyen de détection thermosensible.

On entend par « moyen de détection thermosensible », un moyen qui, de manière réversible, est apte à se dilater ou changer d'état en fonction de la température du fluide caloporteur.

Ainsi, le moyen de détection thermosensible peut être par exemple un bilame, une capsule de cire ou un élément à mémoire de forme.

Le changement d'état du moyen de détection thermosensible commande généralement automatiquement l'ouverture en provoquant, à l'encontre de moyens de rappel des moyens d'obturation vers la position fermée, le déplacement de moyens d'obturation depuis la position fermée jusqu'à la position ouverte.

En variante, les moyens 26 de régulation sont susceptibles d'être pilotés activement en ouverture (et non passivement par des moyens de détection thermosensible), par exemple électriquement.

Les moyens 26 de régulation sont formés par tout autre moyen de régulation équivalente apte à occuper au moins une position ouverte et une position fermée pour contrôler sélectivement la circulation du fluide caloporteur en fonction de la température.

On a représenté sur les figures 2 à 4, un exemple d'utilisation d'un radiateur 10 de refroidissement selon la figure 1 dans un circuit 100 de refroidissement d'un moteur 102 à combustion interne, notamment de véhicule automobile.

Le circuit 100 de refroidissement comporte un premier circuit 104 de refroidissement, dit haute température (ou HT) et un deuxième circuit 106 de refroidissement, dit basse température (ou BT).

Dans la description qui suit du circuit 100 de refroidissement, les termes « haute température » qualifient un circuit de refroidissement dans lequel le fluide caloporteur a une température qui est supérieure à celle d'un fluide caloporteur circulant dans un autre circuit de refroidissement, alors qualifié par comparaison de circuit de refroidissement « basse température ».

De préférence, le premier circuit 104 de refroidissement haute température et le deuxième circuit 106 de refroidissement basse température sont susceptibles d'être mis en communication de manière à établir une circulation de fluide caloporteur entre l'un et l'autre.

En variante non représentée, le premier circuit 104 de refroidissement haute température et le deuxième circuit 106 de refroidissement basse température sont indépendants.

Le premier circuit 104 de refroidissement haute température représenté sur la figure 2 illustre un exemple de réalisation connu et donné à titre non limitatif.

Le premier circuit 104 de refroidissement haute température comporte au moins une pompe 108 qui, agencée en amont du moteur 102 à combustion interne, est destinée à assurer la mise en circulation du fluide caloporteur.

Le fluide caloporteur mis en circulation dans le circuit 100 de refroidissement est encore appelé « liquide de refroidissement » et généralement constitué par l'eau comportant un ou plusieurs additifs.

Le premier circuit 104 de refroidissement haute température comporte un boîtier 110 de régulation qui est agencé en aval du moteur 102.

Le boîtier 110 comporte un premier raccordement 112 à une première conduite 114 dans laquelle est agencé un aérotherme 116 pour le chauffage de l'habitacle du véhicule.

Le premier circuit 104 de refroidissement haute température comporte une deuxième conduite 118 dans laquelle est agencé un échangeur 120 thermique dans lequel le fluide caloporteur est destiné à être mis en relation d'échange thermique avec une partie des gaz d'échappement mis en recirculation vers l'admission du moteur 102, recirculation qui est communément appelée EGR acronyme en anglais pour « *Exhaust Gas Recirculation ».*

La deuxième conduite 118 formant une partie basse pression est raccordée à une extrémité en aval de la pompe 108 et à l'autre extrémité à la première conduite 114, en aval de l'aérotherme 116.

Le fluide caloporteur circulant respectivement dans la première conduite 114 et la deuxième conduite 118 est, après leur jonction, ramené en amont de la pompe 108 par une troisième conduite 121.

Le boîtier 110 comporte un deuxième raccordement 122 au niveau duquel est disposée une vanne 124 trois voies comportant une première voie 126 de sortie et une deuxième voie 128 de sortie qui sont mises sélectivement en communication avec le reste du circuit 104 de refroidissement haute température.

La première voie 126 est reliée à un radiateur 130 de refroidissement (dit haute température ou HT) par une conduite 132 d'amenée qui est raccordée à une extrémité à ladite première voie 126 et à l'autre extrémité à une entrée 134 du radiateur 130.

Le radiateur 130 de refroidissement HT comporte au moins une sortie 136 qui est reliée par une conduite 138 d'évacuation à un échangeur 140 thermique (encore appelé EMO acronyme en anglais pour « *Exchange Motor Oil* ») dans lequel le fluide caloporteur est mis en relation d'échange thermique avec un autre fluide formé par l'huile circulant notamment dans le moteur 102.

Le sens de l'échange thermique réalisé notamment dans l'échangeur 120 et/ou l'échangeur 140 est notamment un transfert de calories vers le fluide caloporteur, c'est-à-dire un refroidissement, mais pas exclusivement dès lors que le transfert de calories pourrait s'opérer dans l'autre sens.

La deuxième voie 128 est également reliée à l'échangeur 140 thermique par une conduite 142, dite de bypass, qui permet à tout ou partie du fluide caloporteur de court-circuiter, de contourner le radiateur 130 de refroidissement

Dans certaines phases de fonctionnement du moteur 102 comme le démarrage à froid, le fluide caloporteur n'a en effet pas besoin d'être refroidi et l'on recherche inversement à obtenir une montée en température rapide du moteur 102.

Avantageusement, le premier circuit 104 de refroidissement haute température comporte une conduite 144 de délestage en cas de surpression en entrée du radiateur 130 de refroidissement. Une telle conduite 144 de délestage permet de protéger le radiateur en opérant une mise en communication des circuits haute température 104 et basse température 106, ce qui tend à équilibrer la pression des deux circuits à une même valeur.

De préférence, la conduite 144 comporte un clapet 145 anti-retour et un bocal 146 de dégazage. Le clapet 145 anti-retour est taré à une valeur de pression de sorte à permettre l'écoulement du fluide dans la boucle 144 en cas de surpression. La surpression est absorbée par l'intermédiaire du bocal 146 de dégazage.

Avantageusement, la conduite 144 est raccordée à une extrémité à l'entrée 134 du radiateur 130 de refroidissement HT et à l'autre extrémité à une ouverture 148 qui communique avec la sortie 136 du radiateur 130 de refroidissement HT.

On décrira maintenant plus particulièrement le circuit 106 de refroidissement basse température dans lequel est agencé un radiateur 10 de refroidissement selon l'invention et tel que décrit précédemment en référence à la figure 1.

Le circuit 106 de refroidissement basse température comporte au moins une conduite 150 principale dans laquelle est agencé le radiateur 10 de refroidissement.

Le radiateur 10 de refroidissement est encore appelé « basse température» (ou BT) comme le circuit 106 de refroidissement auquel il appartient et par comparaison au radiateur 130 de refroidissement HT du circuit 104 de refroidissement haute température.

La conduite 150 principale du circuit 106 de refroidissement basse température comporte en outre des moyens 152 de contrôle.

De préférence, les moyens 152 de contrôle sont constitués par une vanne trois voies, ladite vanne comportant une première voie 154 d'entrée, une deuxième voie 156 d'entrée et une troisième voie 158 de sortie.

La conduite 150 principale comporte un refroidisseur 160 d'air de suralimentation. La conduite 150 principale comporte une pompe 162 qui est agencée en aval de la vanne 152 et en amont du refroidisseur 160 d'air de suralimentation.

La troisième voie 158 de sortie de la vanne 152 est ainsi reliée à ladite pompe 162 qui est elle-même reliée audit refroidisseur 160 d'air de suralimentation.

Le radiateur 10 de refroidissement est monté en série avec le refroidisseur 160 d'air de suralimentation de manière que ledit refroidisseur 160 d'air de suralimentation soit relié à l'ouverture 18 d'entrée du radiateur 10 de refroidissement.

Le radiateur 10 de refroidissement est agencé en aval dudit refroidisseur 160 d'air de suralimentation.

La première voie 154 d'entrée de la vanne 152 est reliée par une première conduite 164 de retour à la seconde ouverture 22 de sortie du radiateur 10 de refroidissement.

La deuxième voie 156 d'entrée de la vanne 152 est reliée par une deuxième conduite 166 de retour à la première ouverture 20 de sortie du radiateur 10 de refroidissement.

Tel qu'indiqué précédemment, le circuit 106 de refroidissement basse température est avantageusement relié au circuit 104 de refroidissement haute température du moteur 102 à combustion interne.

Tel qu'illustré sur la figure 2, le circuit 106 de refroidissement basse température est relié audit circuit 104 de refroidissement haute température par au moins une première conduite 168 de liaison.

La première conduite 168 de liaison comporte une extrémité qui est reliée à la conduite 150 principale du circuit 106 de refroidissement basse température.

De préférence, la première conduite 168 de liaison est raccordée à la conduite 150 principale entre la voie 158 de sortie de la vanne 152 trois voies et la pompe 162.

La première conduite 168 de liaison comporte une autre extrémité qui est reliée à la conduite 144 associée au radiateur 130 de refroidissement HT du circuit 104 de refroidissement HT.

De préférence, la première conduite 168 de liaison est raccordée à la conduite 144, en aval du bocal 146 de dégazage.

Avantageusement, le circuit 106 de refroidissement basse température comporte au moins un organe 170 de régulation, tel qu'une électrovanne, pour contrôler sélectivement la circulation du fluide caloporteur dans ladite première conduite 168 de liaison entre le circuit 104 de refroidissement haute température et ledit circuit 106 de refroidissement basse température.

Le circuit 106 de refroidissement basse température est également relié audit circuit 104 de refroidissement haute température par une deuxième conduite 172 de liaison.

La deuxième conduite 172 de liaison est raccordée à une extrémité à la conduite 150 principale et à l'autre extrémité à la conduite 144.

La deuxième conduite 172 de liaison se raccorde à la conduite 150 principale entre le refroidisseur 160 d'air de suralimentation et le radiateur 10 de refroidissement.

La deuxième conduite 172 de liaison se raccorde à la conduite 144 entre le clapet 145 anti-retour et le bocal 146 de dégazage.

On décrira maintenant le fonctionnement du circuit 106 de refroidissement basse température comportant ledit radiateur 10 de refroidissement.

Tel qu'illustré par la figure 3, lorsque les moyens 26 de régulation occupent la position fermée, la première conduite 164 de retour forme alors, avec la conduite 150 principale, une boucle fermée by-passant le radiateur 10 de refroidissement.

La position fermée des moyens 26 de régulation correspond à une première phase de fonctionnement du circuit 106 de refroidissement basse température.

Dans cette première phase de fonctionnement, on souhaite obtenir une montée en température du fluide caloporteur en ne le refroidissant pas et cela pour notamment optimiser le fonctionnement du refroidisseur 160 d'air de suralimentation.

La première phase de fonctionnement correspond par exemple à un démarrage à froid du moteur 102 à combustion interne.

Lors d'un démarrage à froid, un refroidissement du fluide caloporteur dans le radiateur 10 de refroidissement du circuit 106 de refroidissement aurait pour conséquence un échange thermique trop important de l'air de suralimentation par le refroidisseur 160 d'air de suralimentation.

Dans cette première phase de fonctionnement, le fluide caloporteur est introduit par l'ouverture 18 d'entrée dans la première boîte 12 collectrice pour en sortir par la seconde ouverture 22 de sortie.

Le radiateur 10 de refroidissement est by-passé, court-circuité, le fluide caloporteur ne traversant pas le faisceau 16 de tubes dès lors que la circulation à travers la première ouverture 20 de sortie est fermée par les moyens 26 de régulation.

Avantageusement, la première boîte 12 collectrice sert de té de raccordement.

Tel qu'illustré par la figure 4, lorsque les moyens 26 de régulation occupent la position ouverte, la deuxième conduite 166 de retour forme, avec la conduite 150 principale, une boucle fermée comportant le radiateur 10 de refroidissement.

La position ouverte des moyens 26 de régulation correspond à une deuxième phase de fonctionnement du circuit 106 de refroidissement basse température.

Dans cette deuxième phase et contrairement à la première phase de fonctionnement, on souhaite refroidir le fluide caloporteur circulant dans le circuit 106 de refroidissement basse température.

En effet, le même fluide caloporteur va ensuite permettre de refroidir l'air de suralimentation traversant le refroidisseur 160 d'air de suralimentation.

La deuxième phase de fonctionnement correspond par exemple au besoin de réguler la température du fluide caloporteur lorsque le circuit 106 de refroidissement basse température comprenant ledit le refroidisseur 160 d'air de suralimentation a atteint ladite température (TS) de seuil des moyens 26 de régulation.

L'atteinte de la température (TS) de seuil par le fluide caloporteur en circulation dans le circuit 106 de refroidissement basse température provoque un changement de position des moyens 26 de régulation, tel qu'un thermostat, qui passe de la position fermée à la position ouverte.

## Revendications

1. Radiateur (10) de refroidissement, notamment pour un véhicule automobile, comportant au moins :
- une première boîte (12) collectrice qui comporte au moins une ouverture (18) d'entrée d'un fluide caloporteur,
- une deuxième boîte (14) collectrice comportant au moins une ouverture (20) de sortie, dite première, dudit fluide caloporteur,
- un faisceau (16) de tubes qui communique avec ladite première boîte (12) et avec ladite deuxième boîte (14) et dans lequel ledit fluide caloporteur est destiné à circuler pour être mis en relation d'échange thermique avec un autre fluide traversant des surfaces d'échange thermique associées audit faisceau (16) de tubes,
ledit radiateur (10) de refroidissement comporte au moins une autre ouverture (22) de sortie, dite seconde, qui est agencée dans la première boîte (12) collectrice,
**caractérisé en ce qu'**il comprend des moyens (26) de régulation qui sont aptes à occuper au moins :
- une position ouverte dans laquelle ledit fluide caloporteur est évacué par la première ouverture (20) de sortie après avoir circulé dans le faisceau (16) de tubes ; et
- une position fermée dans laquelle ledit fluide caloporteur est évacué par la seconde ouverture (22) de sortie en by-passant le faisceau (16) de tubes.

2. Radiateur de refroidissement selon la revendication 1, **caractérisé en ce que** la deuxième boîte (14) collectrice comporte lesdits moyens (26) de régulation aptes à contrôler la circulation du fluide caloporteur par ladite première ouverture (20) de sortie.

3. Radiateur de refroidissement selon la revendication 1 ou 2, **caractérisé en ce que** les moyens (26) de régulation sont commandés en position ouverte lorsque la température du fluide caloporteur est supérieure ou égale à une température (TS) de seuil déterminée.

4. Radiateur de refroidissement selon l'une quelconque des revendications précédentes, **caractérisé en ce que** les moyens (26) de régulation comportent des moyens d'obturation qui sont commandés en position par au moins un moyen de détection thermosensible ou qui sont pilotés.

5. Radiateur de refroidissement selon l'une quelconque des revendications précédentes, **caractérisé en ce que** la seconde ouverture (22) de sortie est juxtaposée à l'ouverture (18) d'entrée.

6. Circuit (106) de refroidissement basse température d'un moteur à combustion interne, notamment de véhicule automobile, ledit circuit (106) de refroidissement basse température comportant au moins un radiateur (10) de refroidissement selon l'une quelconque des revendications précédentes et une conduite (150) principale qui comporte au moins des moyens (152) de contrôle, une pompe (162) et un refroidisseur (160) d'air de suralimentation, **caractérisé en ce que** le radiateur (10) de refroidissement est monté en série avec le refroidisseur (160) d'air de suralimentation de manière que ledit refroidisseur (160) d'air de suralimentation soit relié à l'ouverture (18) d'entrée du radiateur (10) de refroidissement.

7. Circuit de refroidissement selon la revendication 6, **caractérisé en ce que** lesdits moyens (152) de contrôle sont formés par une vanne trois voies qui comporte une première voie (154) d'entrée, une deuxième voie (156) d'entrée et une troisième voie (158) de sortie et **en ce que** la première voie (154) d'entrée de la vanne est reliée par une première conduite (164) de retour à la seconde ouverture (22) de sortie du radiateur (10) de refroidissement de manière à former, avec la conduite (150) principale, une boucle fermée by-passant le radiateur (10) de refroidissement lorsque les moyens (26) de régulation occupent la position fermée.

8. Circuit de refroidissement selon la revendication 7, **caractérisé en ce que** la deuxième voie (156) d'entrée de la vanne (152) est reliée par une deuxième conduite (166) de retour à la première ouverture (18) de sortie du radiateur (10) de refroidissement de manière à former, avec la conduite (150) principale, une boucle fermée comportant le radiateur (10) de refroidissement lorsque les moyens (26) de régulation occupent la position ouverte.

9. Circuit de refroidissement selon la revendication 7 ou 8, **caractérisé en ce que** ladite troisième voie (158) de sortie de la vanne (152) est reliée à ladite pompe (162) qui est reliée audit refroidisseur (160) d'air de suralimentation.

## Patentansprüche

1. Kühlradiator (10), insbesondere für ein Kraftfahrzeug, welcher wenigstens aufweist:
- einen ersten Sammelkasten (12), welcher wenigstens eine Eintrittsöffnung (18) für ein Wärmeträgerfluid aufweist,
- einen zweiten Sammelkasten (14), der wenigstens eine sogenannte erste Austrittsöffnung (20) für das Wärmeträgerfluid aufweist,
- ein Rohrbündel (16), welches mit dem ersten Sammelkasten (12) und mit dem zweiten Sammelkasten (14) in Verbindung steht und in welchem das Wärmeträgerfluid zu zirkulieren bestimmt ist, um in eine Wärmeaustauschbeziehung mit einem anderen Fluid gebracht zu werden, das dem Rohrbündel (16) zugeordnete Wärmeaustauschflächen überquert,
wobei der Kühlradiator (10) wenigstens eine weitere, sogenannte zweite Austrittsöffnung (22) aufweist, welche im ersten Sammelkasten (12) angeordnet ist,
**dadurch gekennzeichnet, dass** er Regelungsmittel (26) umfasst, welche geeignet sind, wenigstens einzunehmen:
- eine geöffnete Position, in welcher das Wärmeträgerfluid durch die erste Austrittsöffnung (20) abgelassen wird, nachdem es im Rohrbündel (16) zirkuliert ist; und
- eine geschlossene Position, in welcher das Wärmeträgerfluid unter Umgehung des Rohrbündels (16) durch die zweite Austrittsöffnung (22) abgelassen wird.

2. Kühlradiator nach Anspruch 1, **dadurch gekennzeichnet, dass** der zweite Sammelkasten (14) die Regelungsmittel (26) aufweist, die geeignet sind, die Strömung des Wärmeträgerfluids durch die erste Austrittsöffnung (20) zu steuern.

3. Kühlradiator nach Anspruch 1 oder 2, **dadurch gekennzeichnet, dass** die Regelungsmittel (26) in die geöffnete Position gesteuert werden, wenn die Temperatur des Wärmeträgerfluids größer oder gleich einer bestimmten Schwellenwerttemperatur (TS) ist.

4. Kühlradiator nach einem der vorhergehenden Ansprüche, **dadurch gekennzeichnet, dass** die Regelungsmittel (26) Verschlussmittel aufweisen, welche durch wenigstens ein wärmeempfindliches Erfassungsmittel positionsgesteuert werden oder welche vorgesteuert werden.

5. Kühlradiator nach einem der vorhergehenden Ansprüche, **dadurch gekennzeichnet, dass** die zweite Austrittsöffnung (22) neben der Eintrittsöffnung (18) angeordnet ist.

6. Niedertemperatur-Kühlkreislauf (106) einer Brennkraftmaschine, insbesondere eines Kraftfahrzeugs, wobei der Niedertemperatur-Kühlkreislauf (106) wenigstens einen Kühlradiator (10) nach einem der vorhergehenden Ansprüche und eine Hauptleitung (150), welche wenigstens Steuerungsmittel (152), eine Pumpe (162) und einen Ladeluftkühler (160) aufweist, umfasst, **dadurch gekennzeichnet, dass** der Kühlradiator (10) mit dem Ladeluftkühler (160) in Reihe geschaltet ist, derart, dass der Ladeluftkühler (160) mit der Eintrittsöffnung (18) des Kühlradiators (10) verbunden ist.

7. Kühlkreislauf nach Anspruch 6, **dadurch gekennzeichnet, dass** die Steuerungsmittel (152) von einem Dreiwegeventil gebildet werden, welches einen ersten Eintrittsweg (154), einen zweiten Eintrittsweg (156) und einen dritten Austrittsweg (158) aufweist, und dadurch, dass der erste Eintrittsweg (154) des Ventils durch eine erste Rücklaufleitung (164) mit der zweiten Austrittsöffnung (22) des Kühlradiators (10) verbunden ist, so dass mit der Hauptleitung (150) eine geschlossene Schleife gebildet wird, die den Kühlradiator (10) umgeht, wenn die Regelungsmittel (26) die geschlossene Position einnehmen.

8. Kühlkreislauf nach Anspruch 7, **dadurch gekennzeichnet, dass** der zweite Eintrittsweg (156) des Ventils (152) durch eine zweite Rücklaufleitung (166) mit der ersten Austrittsöffnung (18) des Kühlradiators (10) verbunden ist, so dass mit der Hauptleitung (150) eine geschlossene Schleife gebildet wird, die den Kühlradiator (10) aufweist, wenn die Regelungsmittel (26) die geöffnete Position einnehmen.

9. Kühlkreislauf nach Anspruch 7 oder 8, **dadurch gekennzeichnet, dass** der dritte Austrittsweg (158) des Ventils (152) mit der Pumpe (162) verbunden ist, welche mit dem Ladeluftkühler (160) verbunden ist.

## Claims

1. Cooling radiator (10), notably for a motor vehicle, comprising at least:
- a first manifold box (12) which comprises at least one inlet opening (18) for a heat-transfer fluid,
- a second manifold box (14) comprising at least one so-called first outlet opening (20) for said heat-transfer fluid,
- a bundle (16) of tubes which communicates with said first box (12) and with said second box (14) and in which said heat-transfer fluid is intended to circulate to be placed in a heat-exchange relationship with another fluid passing over the heat-exchange surfaces associated with said bundle (16) of tubes,
said cooling radiator (10) comprises at least one other, so-called second outlet opening (22), which is arranged in the first manifold box (12),
**characterized in that** it comprises regulation means (26) which are able to occupy at least:
- an open position in which said heat-transfer fluid is discharged through the first outlet opening (20) after having circulated in the bundle (16) of tubes; and
- a closed position in which said heat-transfer fluid is discharged by the second outlet opening (22) by bypassing the bundle (16) of tubes.

2. Cooling radiator according to Claim 1, **characterized in that** the second manifold box (14) comprises said regulation means (26) capable of controlling the circulation of the heat-transfer fluid through said first outlet opening (20).

3. Cooling radiator according to Claim 1 or 2, **characterized in that** the regulation means (26) are ordered to the open position when the temperature of the heat-transfer fluid is greater than or equal to a determined threshold temperature (TS).

4. Cooling radiator according to any one of the preceding claims, **characterized in that** the regulation means (26) comprise blocking means which are position-controlled by at least one thermosensitive detection means or which are driven.

5. Cooling radiator according to any one of the preceding claims, **characterized in that** the second outlet opening (22) is juxtaposed with the inlet opening (18).

6. Low-temperature cooling circuit (106) of an internal combustion engine, notably of a motor vehicle, said low-temperature cooling circuit (106) comprising at least one cooling radiator (10) according to any one of the preceding claims and a main duct (150) which comprises at least control means (152), a pump (162) and a supercharging air cooler (160), **characterized in that** the cooling radiator (10) is mounted in series with the supercharging air cooler (160) so that said supercharging air cooler (160) is linked to the inlet opening (18) of the cooling radiator (10).

7. Cooling circuit according to Claim 6, **characterized in that** said control means (152) are formed by a three-way valve which comprises a first, inlet way (154), a second, inlet way (156) and a third, outlet way (158), and **in that** the first, inlet way (154) of the valve is linked by a first return duct (164) to the second outlet opening (22) of the cooling radiator (10) so as to form, with the main duct (150), a closed loop bypassing the cooling radiator (10) when the regulation means (26) occupy the closed position.

8. Cooling circuit according to Claim 7, **characterized in that** the second, inlet way (156) of the valve (152) is linked by a second return duct (166) to the first outlet opening (18) of the cooling radiator (10) so as to form, with the main duct (150), a closed loop including the cooling radiator (10) when the regulation means (26) occupy the open position.

9. Cooling circuit according to Claim 7 or 8, **characterized in that** said third, outlet way (158) of the valve (152) is linked to said pump (162) which is linked to said supercharging air cooler (160).
